# EUROPÄISCHE PATENTANMELDUNG

(11) **EP 4 186 353 A1**
(43) Veröffentlichungstag der Anmeldung: **31.05.2023**
(21) Anmeldenummer: 21211229.6
(22) Anmeldetag: 30.11.2021
(51) Int. Cl.: A01G 13/02, A01G 9/02, A01G 20/20, A01G 9/033

(54) **MODUL ZUR AUFNAHME VON PFLANZEN**

(71) Anmelder: Ablaß, Antonia, 17268 Templin (DE)
(72) Erfinder: Ablaß, Antonia, 17268 Templin (DE)
(74) Vertreter: Maikowski & Ninnemann Patentanwälte Partnerschaft mbB

(57) **Zusammenfassung**

Die Erfindung betrifft ein Modul zur Aufnahme von Pflanzen, mit mindestens zwei Lagen aus linearen Elementen, wobei die mindestens zwei Lagen miteinander verbunden sind, so dass zwischen den mindestens zwei Lagen ein erster Aufnahmeraum zur Aufnahme eines Substrats für Wurzeln der Pflanzen ausgebildet ist. Die mindestens zwei Lagen weisen unterschiedliche Dichten an linearen Elementen auf.

## Beschreibung

Die Erfindung betrifft ein Modul zur Aufnahme von Pflanzen nach dem Oberbegriff des Anspruchs 1, ein Modulsystem nach Anspruch 12 und ein Verfahren zur Herstellung eines Moduls nach Anspruch 15.

Ein derartiges Modul umfasst mindestens zwei Lagen aus linearen Elementen, wobei die mindestens zwei Lagen miteinander verbunden sind, so dass zwischen den mindestens zwei Lagen ein erster Aufnahmeraum zur Aufnahme eines Substrats für Wurzeln der Pflanzen, wie zum Beispiel Erde, ausgebildet ist.

Herkömmliche Module werden beispielsweise für die Uferbefestigung für Gartenteiche oder als Böschungsbefestigung verwendet. Derartige Module bestehen aus Kokosfasern und verrotten nach einiger Zeit, so dass sie nachhaltig verwendet werden können. Zur Befestigung werden die Module mit Erde und Pflanzensamen befüllt und an dem zu befestigenden Ort abgelegt. Wenn die Pflanzen aus den Modulen heraus wachsen, befestigen sie mit ihren Wurzeln die Erde und somit das Ufer oder die Böschung. Wenn die Module verrotten, bieten die Wurzeln der Pflanzen Halt in der Erde, um eine ausreichende Befestigung zu gewährleisten.

Aus der CN 102 405 823 A ist ein Nährstoffversorgungsmodul mit einer Basisschicht und einer Deckschicht bekannt, die aus natürlichen Pflanzenfasern gewebt sind. Zwischen der Basisschicht und der Deckschicht sind eine Wasserspeicherschicht, zwei Düngerschichten, und drei Faserschichten angeordnet. Die Basisschicht und die Deckschicht werden mit einer Nadelstanzmaschine verbunden.

Aufgabe der vorliegenden Erfindung ist es, ein verbessertes Modul zur Verfügung zu stellen.

Gemäß einem ersten Aspekt der Erfindung wird die Aufgabe durch einen Gegenstand mit den Merkmalen des Anspruchs 1 gelöst.

Demnach weisen die mindestens zwei Lagen unterschiedliche Dichten an linearen Elementen auf.

Die Erfindung geht von dem Gedanken aus, das Modul flexibel in jeglicher Umgebung einsetzen zu können. Das Modul soll dabei nicht darauf angewiesen sein, auf dem Erdboden zu liegen. Außerdem soll das Modul ein kleinteiliges Substrat für die Wurzeln der Pflanzen möglichst verliersicher halten können, so dass sich das Substrat nicht in der Umgebung verteilen kann und diese unter Umständen verschmutzt. Als Pflanzen kommen beispielsweise Kräuterpflanzen wie Basilikum oder Koriander oder Nutzpflanzen wie Giersch und Taubnessel in Betracht. Grundsätzlich ist das Modul zur Bepflanzung mit einer oder mehrerer beliebiger Pflanzen geeignet. Denkbar sind auch Gräser, Wurzelkeimer und andere kleinere Nutzpflanzen.

Die mindestens zwei Lagen können beispielsweise bahnförmige Textilelemente sein. Als lineare Elemente können insbesondere flexible lineare Elemente verwendet werden. Flexible lineare Elemente können mindestens eine Faser, mindestens ein Filament (Mono- oder Multifil) oder mindestens einen Faden aufweisen oder daraus bestehen. Beispielsweise können Naturfasern wie Hanf und natürliche Chemiefasern (beispielsweise Viskose und PLA) oder synthetische Chemiefasern (beispielsweise Polyester) verwendet werden. Zumindest eine der mindestens zwei Lagen kann lineare Elemente aufweisen, in denen Pflanzensamen enthalten sind.

Die Verbindung der mindestens zwei Lagen kann dazu ausreichen, dass zwischen den mindestens zwei Lagen ein erster Aufnahmeraum ausgebildet werden kann. Dazu können die mindestens zwei Lagen an ihren Rändern und/oder an einem Innenbereich innerhalb der Ränder der mindestens zwei Lagen verbunden sein. Der erste Aufnahmeraum kann beispielsweise derartig durch die Verbindung an den Rändern begrenzt sein, dass er im Querschnitt parallel zu den Lagen rechteckig ist oder ein Rechteck mit abgerundeten Ecken ausbildet. Letzteres kann den Vorteil haben, dass das Substrat den ersten Aufnahmeraum leichter ausfüllt. An einem Innenbereich innerhalb der Ränder der mindestens zwei Lagen können die Lagen durch beispielsweise Anbindungspunkte verbunden sein.

In einer Ausgestaltung sind die mindestens zwei Lagen aus den linearen Elementen gewebt. Bei den linearen Elementen kann es sich also um Fäden handeln, aus denen die mindestens zwei Lagen in einer Webmaschine hergestellt werden. Durch das Weben der mindestens zwei Lagen können die Dichten der linearen Elemente der mindestens zwei Lagen in gegenseitiger Abhängigkeit bestimmt werden. Wenn die Dichte einer ersten der mindestens zwei Lagen höher ist, ist eine Dichte der zweiten der mindestens zwei Lagen geringer und umgekehrt. Durch die unterschiedlichen Dichten der mindestens zwei Lagen können die Eigenschaften des Moduls maßgeschneidert für eine vorbestimmte Verwendung ausgelegt werden.

Bei einer Verwendung des Moduls als Vertikalbegrünung kann beispielsweise die erste der mindestens zwei Lagen eine höhere Dichte der linearen Elemente aufweisen als die zweite der mindestens zwei Lagen, so dass die erste Lage das Gewicht des Moduls tragen kann und durch die zweite Lage die Pflanzen hindurchwachsen können. Außerdem kann eine höhere Dichte der linearen Elemente die Wasserundurchlässigkeit erhöhen.

In einer Ausgestaltung ist die Dichte der linearen Elemente durch eine Anzahl von linearen Elementen pro Flächeneinheit bestimmt. Die mindestens zwei Lagen können also eine unterschiedliche Anzahl von linearen Elementen pro Flächeneinheit der jeweiligen Lage aufweisen. Ein dichteres Netzwerk kann eine höhere Anzahl von der linearen Elemente pro Flächeneinheit darstellen.

Wenn die mindestens zwei Lagen aus den linearen Elementen gewebt sind, kann die Anzahl von linearen Elementen pro Flächeneinheit eine Anzahl von Schussfäden und Kettfäden pro Flächeneinheit entsprechen. Schussfäden und Kettfäden können beim Weben verwendet werden, um die Lagen herzustellen, wobei Schussfäden und Kettfäden quer zueinander in den mindestens zwei Lagen angeordnet sind. Insbesondere kann eine vorgegebene Anzahl von Kettfäden und Schussfäden zwischen den mindestens zwei Lagen aufgeteilt werden, so dass Kettfäden und Schussfäden, die der einen Lage zugeordnet sind, der anderen Lage nicht mehr zugeordnet werden können. Dadurch kann ein mehrlagiges Gewebe gewebt werden.

Beispielsweise kann der ersten Lage 60-65 % der Fäden (Kett- und Schussfäden) zugeordnet sein. Die zweite Lage kann dementsprechend 35-40 % der Fäden aufweisen. Mit anderen Worten kann die erste Lage im Allgemeinen das 1,5- bis 2-fache, insbesondere 1,6 bis 1,8 -fache der Dichte der linearen Elemente, also beispielsweise der Fadendichte, der zweiten Lage aufweisen.

In einer Ausgestaltung weist das Modul eine Wurzelseite und eine Sprossseite auf. Seitens der Wurzelseite sind bei einer bestimmungsgemäßen Verwendung des Moduls, also beispielsweise als Vertikalbegrünung mit Substrat, die Wurzeln der Pflanzen angeordnet. Seitens der Sprossseite sind bei einer bestimmungsgemäßen Verwendung des Moduls die Sprosse der Pflanzen angeordnet. Die Sprosse der Pflanzen können beispielsweise Blätter und Blüten umfassen. Die erste der mindestens zwei Lagen kann auf der Wurzelseite angeordnet sein. Die zweite der mindestens zwei Lagen kann auf der Sprossseite angeordnet sein. Gemäß dieser Ausgestaltung kann die erste Lage eine höhere Dichte an linearen Elementen als die zweite Lage aufweisen. Die Pflanzen können dann beispielsweise durch die zweite Lage hindurch wachsen, während die erste Lage eine so hohe Dichte an linearen Elementen aufweist, das die Wurzeln sie nicht durchdringen können und/oder das Substrat in dem ersten Aufnahmeraum gehalten wird und/oder ein wasserundurchlässiger Abschluss des Moduls zur Verfügung gestellt wird.

In einer Ausgestaltung ist eine dritte Lage aus linearen Elementen vorgesehen, die zumindest mit der zweiten Lage der mindestens zwei Lagen verbunden ist, so dass zwischen der zweiten Lage und der dritten Lage ein zweiter Aufnahmeraum ausgebildet ist. Der zweite Aufnahmeraum kann beispielsweise zur Aufnahme eines Samenelements dienen. Die drei Lagen können insbesondere an mindestens drei Seiten der Lagen miteinander verbunden sein.

Der erste Aufnahmeraum zur Aufnahme eines Substrats und der zweite Aufnahmeraum zur Aufnahme eines Samenelements können gegebenenfalls auch für alternative Substanzen zur Unterstützung des Pflanzenwachstums verwendet werden. Beispielsweise kann der erste Aufnahmeraum zur Aufnahme eines Materials zur Speicherung von Wasser, wie zum Beispiel Stroh und der zweite Aufnahmeraum zur Aufnahme von einem Substrat wie beispielsweise Erde genutzt werden. In diesem Sinne sind die angegebenen Zwecke nicht beschränkt.

Die dritte Lage kann zusätzlich auch mit der ersten Lage verbunden sein, so dass die mindestens drei Lagen miteinander verbunden sind. Die mindestens drei Lagen können aus den linearen Elementen gewebt sein.

In einer Ausgestaltung nimmt die Dichte an linearen Elementen von der ersten über die zweite zur dritten Lage ab. Die dritte Lage kann also die geringste Dichte der drei Lagen aufweisen. Alternativ kann die Dichte in der zweiten Lage geringer sein als in der ersten und dritten Lage.

Wenn die mindestens drei Lagen aus den linearen Elementen gewebt sind, kann eine vorgegebene Anzahl von Kettfäden zwischen den mindestens zwei Lagen aufgeteilt werden, so dass Kettfäden, die beispielsweise der ersten Lage zugeordnet sind, der zweiten und der dritten Lage nicht mehr zugeordnet werden können.

Beispielsweise kann der ersten Lage 60 bis 84 %, insbesondere 60 bis 65 %, ganz insbesondere 62,5 %, der Fäden (Kett- und Schussfäden) zugeordnet sein. Der zweiten Lage kann 10 bis 35 %, insbesondere 20 bis 35 %, ganz insbesondere 27,5 % der Fäden zugeordnet sein. Der dritten Lage kann 5 bis 30 %, insbesondere 5 bis 15 %, ganz insbesondere 10 %, der Fäden zugeordnet sein. Das Verhältnis der Anzahl der Fäden pro Flächeneinheit zwischen der ersten, der zweiten und der dritten Lage kann beispielsweise 6:1:3 oder 25:11:4 betragen.

Die erste Lage kann die höchste Dichte an linearen Elementen der Lagen aufweisen, so dass sie das Gewicht des Moduls tragen kann und/oder besonders undurchlässig für ein kleinteiliges Substrat ist. Die zweite Lage kann eine geringere Dichte an linearen Elementen als die erste Lage aufweisen, die ausreichend groß ist, um ein kleinteiliges Substrat in den ersten Aufnahmeraum zu halten, aber gleichzeitig ein Wachstum der Pflanzen durch die zweite Lage hindurch ermöglicht.

Die zweite oder die dritte Lage können die geringste Dichte an linearen Elementen der drei Lagen aufweisen. Sie können somit eine netzartige Schicht bilden. Die Dichte der dritten Lage kann ausreichend groß sein, um beispielsweise ein Samenelement oder einen anderen Gegenstand in dem zweiten Aufnahmeraum zu halten und um eine abgeschlossene Oberfläche, von der die Sprosse der Pflanzen heraus wachsen können, zur Verfügung zu stellen.

Die niedrigste Dichte an linearen Elementen in der zweiten Lage (statt der dritten Lage) kann in einer Ausgestaltung eine netzartige Lage zur Verfügung stellen, um ein großteiliges Substrat, beispielsweise Stroh, in dem ersten Aufnahmeraum zu halten. Dafür kann die Dichte an linearen Elementen der dritten Lage größer sein als die der zweiten Lage, so dass in dem zweiten Aufnahmeraum ein kleinteiligeres Substrat, beispielsweise Erde, gehalten werden kann.

Das Verhältnis einer Anzahl von Kettfäden zu einer Anzahl von Schussfäden in den mindestens zwei Lagen kann in einem Bereich zwischen 1:3 bis 2:1 liegen. Die mindestens zwei Lagen können also entgegengesetzte Verhältnisse von Kettfäden zu Schussfäden aufweisen, wobei die erste Lage mehr Schussfäden als Kettfäden aufweisen kann und die zweite Lage mehr Kettfäden als Schussfäden aufweisen kann oder umgekehrt.

Eine höhere Anzahl von Schussfäden als Kettfäden in der ersten Lage kann dazu beitragen, einen Rand der Lagen, an dem die Lagen miteinander verwoben sein können, mehr zu stabilisieren. Dazu kann beispielsweise ein Verhältnis von Kettfäden zu Schussfäden von 12:13 vorgesehen sein. Eine höhere Anzahl von Kettfäden als Schussfäden in der zweiten Lage kann dazu beitragen, bei der Verwendung des Moduls zur Vertikalbegrünung eine höhere Stabilität der zweiten Lage entlang der Gewichtskraft zu ermöglichen. Dazu kann beispielsweise ein Verhältnis von Kettfäden zu Schussfäden von 8:7 in der zweiten Lage vorgesehen sein.

Wenn eine dritte Lage vorgesehen ist, kann eine höhere Anzahl von Schussfäden als Kettfäden in der dritten Lage vorgesehen sein, um ein stabiles Verweben der dritten Lage mit den anderen Lagen am Rand der Lagen zu ermöglichen. Dazu kann beispielsweise ein Verhältnis von Kettfäden zu Schussfäden von 1:3 in der dritten Lage vorgesehen sein. Das Verhältnis von Kettfäden zu Schussfäden in der zweiten Lage kann in einem solchen Fall insbesondere 7:4 betragen.

In einer Ausgestaltung ist eine vierte Lage vorgesehen. Das Modul kann also mindestens vier Lagen aufweisen. Das Verhältnis der Anzahl der Fäden pro Flächeneinheit zwischen der ersten, der zweiten, der dritten und der vierten Lage kann 5:5:3:3 betragen. Das Verhältnis von Kettfäden zu Schussfäden kann in der ersten Lage und der zweiten Lage jeweils 12:13 und in der dritten und der vierten Lage jeweils 8:7 betragen.

Bei einer Ausgestaltung mit vier Lagen kann ein Aufnahmeraum, der zwischen der dritten und der vierten Lage ausgebildet ist, dazu genutzt werden, eine weitere Substanz zur Unterstützung des Pflanzenwachstums in das Modul einzubringen.

Eine der mindestens zwei Lagen, insbesondere die vierte Lage, kann eine kleinere Fläche als die benachbarte Lage umfassen. Das heißt, dass die vierte Lage an einem Abschnitt der benachbarten Lage angeordnet sein kann. Beispielsweise kann eine der mindestens zwei Lagen eine Tasche an der benachbarten Lage ausbilden. Das Modul kann eine Vielzahl derartiger Taschen aufweisen. Die Taschen können zur Aufnahme eines Substrats für Wurzeln von Pflanzen dienen. Gegebenenfalls ist es erforderlich, die vierte Lage zur Einbringung des Substrats an zumindest einer Seite aufzutrennen. Die Auftrennung kann mit Kleber abgesichert werden.

Bei einem gewebten Modul kann die erste Lage eine erste Bindungsstruktur, beispielsweise als Unterbindung, die zweite Lage eine zweite Bindungsstruktur, beispielsweise als untere Mittelbindung, die dritte Lage eine dritte Bindungsstruktur, beispielsweise als obere Mittelbindung und/oder die vierte Lage eine vierte Bindungsstruktur, beispielsweise als Oberbindung, aufweisen. Die mindestens zwei Lagen können also aus linearen Elementen nach unterschiedlichen Bindungsstrukturen gewebt sein.

In einer Ausgestaltung weisen die mindestens zwei Lagen einen umlaufenden Rand auf, über den sie zumindest abschnittsweise miteinander verbunden, insbesondere verwebt sind. Das Verweben der mindestens zwei Lagen miteinander am Rand kann den Vorteil haben, dass das Modul als einstückiges Textilelement hergestellt werden kann. Außerdem kann ein solcher verwebter Rand besonders stabil sein. Für den Rand eignet sich beispielsweise eine Atlasbindung. Grundsätzlich können die mindestens zwei Lagen über ihren vollständig umlaufenden Rand miteinander verwebt sein. Das Substrat kann gegebenenfalls in den ersten Aufnahmeraum durch Einbringen einer Öffnung in eine der Lagen und anschließendes Verschließen der Öffnung eingebracht werden.

Eine Breite des Randes kann im Verhältnis zu einer Breite des ersten Aufnahmeraums in einer Ebene der mindestens zwei Lagen den spezifischen Anforderungen an das Modul angepasst werden. Insbesondere kann die Breite des Randes entlang einer Umlaufrichtung um den ersten Aufnahmeraum variieren. Der erste Aufnahmeraum kann auf diese Weise in seiner Form in einer Ebene der mindestens zwei Lagen ausgestaltet werden. Denkbar und möglich ist beispielsweise ein rechteckiger Rand, der einen in der Ebene der mindestens zwei Lagen kreisförmigen ersten Aufnahmeraum begrenzt. Die Breite des Randes kann dann an den Ecken größer als entlang der Seiten sein. Andere Formen des ersten Aufnahmeraumes beispielsweise Herzform oder Sternform sind ebenfalls denkbar und möglich. Gegebenenfalls kann der Rand nach der Herstellung des Moduls beschnitten werden. Die vorgeschlagene Formbildung des ersten Aufnahmeraums kann sich ebenso auf den zweiten Aufnahmeraum erstrecken.

Gemäß einer Ausgestaltung ist an einem Abschnitt des Randes eine Öffnung vorgesehen, über die der erste Aufnahmeraum oder ein anderer Aufnahmeraum zugänglich ist. Prinzipiell kann für jeden der Aufnahmeräume eine Öffnung vorgesehen sein. Beispielsweise kann über die Öffnung ein Substrat in den ersten Aufnahmeraum eingebracht werden. Eine derartige Öffnung kann direkt bei der Herstellung des Moduls vorgesehen sein. Insbesondere kann die Öffnung eingewebt sein, so dass eine besonders stabile Öffnung zur Verfügung gestellt wird. Über die Öffnung kann das Modul auf links gedreht werden, so dass der Rand, über den die mindestens zwei Lagen verbunden sind, innerhalb des ersten Aufnahmeraums angeordnet ist. Der verwebte Rand ist dann von außen nicht sichtbar. Die Öffnung kann zusätzlich oder alternativ zum Einbringen von Pflanzen in den ersten Aufnahmeraum dienen. Bei Vorhandensein einer dritten Lage kann sich die Reihenfolge der Lagen beim auf links Drehen des Moduls ändern. Die erste und dritte Lage können bei dem auf links gedrehten Modul aneinandergrenzen, so dass zwischen ihnen der erste Aufnahmeraum ausgebildet ist.

In einer Ausgestaltung weist mindestens eine der Lagen einen Arbeitsbereich auf, dessen Dichte an linearen Elementen gegenüber einem anderen Bereich der mindestens einen der Lagen erhöht ist. Der Arbeitsbereich kann dazu vorgesehen sein, dass an dem Arbeitsbereich eine Öffnung eingebracht wird, beispielsweise durch Aufschneiden der Lage, und die Lage an dem Arbeitsbereich anschließend verschlossen wird, beispielsweise durch Vernähen. Bei einem gewobenen Modul kann der Arbeitsbereich mehr als drei Kettfäden und mehr als vier Schussfäden umfassen. Insbesondere kann der Arbeitsbereich mehr als zehn Kettfäden und Schussfäden umfassen. Dadurch kann eine ausreichend große Stabilität für das Verschließen der Öffnung zur Verfügung gestellt werden.

Die Verwebung der mindestens zwei Lagen über den umlaufenden Rand kann beispielsweise dadurch erreicht werden, dass eine Struktur aus Kett- und Schussfäden der ersten Lage mit einer Struktur aus Kett- und Schussfäden der zweiten Lage am Rand zu einer einzigen Lage zusammengeführt wird. Die mindestens zwei Lagen können an dem Rand alternativ aneinander geklebt oder miteinander vernäht werden. Die alternativen Methoden können eine flexiblere Herstellung des Moduls ermöglichen. Den Verfahren zur Verbindung der mindestens zwei Lagen an einem umlaufenden Rand sind grundsätzlich keine Grenzen gesetzt. Beispielsweise können auch thermische Verfahren eingesetzt werden.

In einer Ausgestaltung, in der die mindestens zwei Lagen über Anbindungspunkte verbunden sind, können die Anbindungspunkte durch Kleben, eine thermische Verbindung der mindestens zwei Lagen oder Vernähen hergestellt werden. Alternativ können die Anbindungspunkte durch Schussfäden hergestellt sein, die Kettfäden der mindestens zwei Lagen an Kreuzungspunkten miteinander verbinden. Eine Größe, Form und Verteilung der Anbindungspunkte kann zur Verbesserung der Stabilität und/oder im Rahmen der Gestaltung des Moduls angepasst werden. Das Wort Anbindungspunkt soll insbesondere nicht als beschränkt auf punktförmige Anbindungen verstanden werden. Die Anbindungspunkte können grundsätzlich punktförmig (beispielsweise an einem Kreuzungspunkt von Fäden) oder flächig (beispielsweise an mehreren Kreuzungspunkten von Fäden) ausgebildet sein. Grundsätzlich kann eine Vielzahl von Lagen über Anbindungspunkte verbunden sein. In einer bevorzugten Ausgestaltung sind mindestens zwei Lagen vorgesehen, beispielsweise eine erste und zweite Lage, die über einen oder mehrere Anbindungspunkte verbunden sind, und mindestens eine weitere Lage, die nicht über die Anbindungspunkte mit der ersten und der zweiten Lage verbunden ist. Die mindestens eine weitere Lage kann über den Rand mit der ersten und der zweiten Lage verwebt sein.

In einer Ausgestaltung sind an einem Abschnitt des Randes mindestens zwei Extralagen angeordnet, die miteinander verbunden sind, so dass sie einen dritten Aufnahmeraum ausbilden. Die zwei Extralagen können von dem Rand der mindestens zwei Lagen abstehen. Sie können an einem von dem Rand der mindestens zwei Lagen beabstandeten Außenrand, beispielsweise einem oberen oder unteren Rand, miteinander verbunden sein, um den dritten Aufnahmeraum auszubilden. Der dritte Aufnahmeraum kann also zwischen dem Rand der mindestens zwei Lagen und dem Außenrand ausgebildet sein. Insbesondere können die mindestens zwei Extralagen mit den mindestens zwei Lagen (über den Rand der mindestens zwei Lagen) verwoben sein. An den mindestens zwei Extralagen kann ein Arbeitsbereich ebenso wie an den mindestens zwei Lagen vorgesehen sein.

In einer Ausgestaltung, in der an einem Abschnitt des Randes eine Öffnung vorgesehen ist, kann an jeder der mindestens zwei Lagen ein dritter Aufnahmeraum durch jeweils zwei Extralagen ausgebildet sein. Die mindestens zwei dritten Aufnahmeräume können also über die Öffnung zwischen den mindestens zwei Lagen zueinander beabstandet sein.

In einer Ausgestaltung ist der dritte Aufnahmeraum dazu ausgebildet, mit einer Befestigungsvorrichtung zusammenzuwirken, um eine Masse des Moduls bei einer Verwendung des Moduls zur Vertikalbegrünung entgegen der Gewichtskraft zu halten. Die Befestigungsvorrichtung kann beispielsweise ein Trägerelement aufweisen, das in den dritten Aufnahmeraum einführbar ist, um das Modul an dem Trägerelement aufzuhängen. Ebenso kann das Trägerelement mit dem Aufnahmeraum über ein Befestigungselement verbunden sein. Alternativ kann ein Leitungsrohr einer Bewässerungsvorrichtung als Befestigungsvorrichtung verwendet werden und in den dritten Aufnahmeraum eingeführt werden, so dass das Modul an dem Leitungsrohr aufgehängt werden kann. Das Modul kann also über die mindestens zwei Extralagen aufhängbar sein.

In einer weiteren Ausgestaltung ist der dritte Aufnahmeraum dazu ausgebildet, eine Absorptionsvorrichtung aufzunehmen, mit der überschüssiges Bewässerungsmittel absorbiert werden kann. Bei der Verwendung des Moduls zur Vertikalbegrünung kann dadurch beispielsweise an dem Modul herunterlaufendes Bewässerungsmittel aufgefangen werden, so dass es nicht auf einen Boden unter dem Modul tropft.

In einer weiteren Ausgestaltung weist mindestens eine der mindestens zwei Lagen eine wasserabweisende Beschichtung auf. Dabei kann es sich beispielsweise um Wollwachs handeln.

Gemäß einem zweiten Aspekt wird die Aufgabe durch ein Modulsystem zur Vertikalbegrünung gelöst. Das Modulsystem weist mindestens ein Modul gemäß einem ersten Aspekt der Erfindung auf und eine Befestigungsvorrichtung zur Befestigung des mindestens einen Moduls, so dass das mindestens eine Modul entgegen der Gewichtskraft gehalten wird.

Gemäß einer Ausgestaltung umfasst das Modulsystem eine Bewässerungsvorrichtung mit mindestens einem Leitungsrohr, über das dem mindestens einen Modul von oben ein Bewässerungsmittel zugeführt werden kann, so dass sich das Bewässerungsmittel entlang der Gewichtskraft entlang des mindestens einen Moduls ausbreiten kann. Das Bewässerungsmittel kann beispielsweise Wasser sein, das von dem Leitungsrohr an dem Modul herunter laufen kann und von dem Substrat aufgenommen werden kann. Dadurch kann eine bequeme und konstante Bewässerung der Pflanzen sichergestellt werden. Insbesondere kann das Bewässerungssystem an ein Regenabwassersystem angeschlossen sein, so dass Regenwasser als Bewässerungsmittel für das Modulsystem genutzt werden kann.

In einer Ausgestaltung ist eine Absorptionsvorrichtung vorgesehen, mit der überschüssiges Bewässerungsmittel absorbiert werden kann. Die Absorptionsvorrichtung kann beispielsweise ein saugfähiges Material, wie einen Schwamm oder Moos, und/oder ein Gefäß aufweisen, in dem sich das überschüssige Bewässerungsmittel ansammeln kann. Insbesondere kann die Absorptionsvorrichtung Bewässerungsmittel aufnehmen, das sich entlang der Gewichtskraft an dem mindestens ein Modul ausgebreitet hat. Die Absorptionsvorrichtung kann dazu dienen, ein weiteres Ausbreiten des Bewässerungsmittels entlang der Gewichtskraft über das mindestens eine Modul hinaus zu verhindern. Dadurch kann ein Verlust von Bewässerungsmittel verhindert werden. Das Bewässerungsmittel, was sich in der Absorptionsvorrichtung angesammelt hat, kann zur Rückführung über die Bewässerungsvorrichtung zur Verfügung gestellt werden.

Gemäß einem dritten Aspekt wird die Aufgabe durch ein Verfahren zur Herstellung des Moduls gelöst. Das Verfahren umfasst die folgenden Schritte: Bereitstellen mindestens einer ersten Lage aus linearen Elementen mit einer ersten Dichte der linearen Elemente; Bereitstellen mindestens einer zweiten Lage aus linearen Elementen mit einer zweiten Dichte der linearen Elementen, die von der ersten Dichte verschieden ist; Verbinden der mindestens zwei Lagen, so dass zwischen den mindestens zwei Lagen ein erster Aufnahmeraum zur Aufnahme eines Substrats für Wurzeln der Pflanzen ausgebildet wird.

Merkmale des ersten Aspekts der Erfindung können für das Modulsystem gemäß des zweiten Aspekts der Erfindung genutzt werden. Außerdem können Merkmale des ersten und des zweiten Aspekts der Erfindung für das Verfahren gemäß des dritten Aspekts der Erfindung genutzt werden.

Der der Erfindung zugrunde liegende Gedanke soll nachfolgend anhand der in den Figuren dargestellten Ausführungsbeispiele näher erläutert werden. Es zeigen:
- Fig. 1: eine Explosionsansicht eines Moduls mit drei Lagen und mit Pflanzen;
- Fig. 2: eine perspektivische Ansicht eines Moduls mit einem umlaufenden Rand;
- Fig. 3A: eine Schnittansicht entlang Kreuzungspunkten eines Kettfadens einer dritten Lage mit Schussfäden der dritten Lage;
- Fig. 3B: einen Rapport eines Moduls mit drei Lagen;
- Fig. 4: eine schematische Ansicht eines Moduls mit Öffnung;
- Fig. 5A: eine schematische Ansicht eines Moduls mit Extralagen;
- Fig. 5B: eine Schnittansicht entlang einer Schnittachse I in Fig. 5A;
- Fig. 5C: eine Schnittansicht eines Moduls mit Extralagen und einer Öffnung;
- Fig. 6: einen Rapport von zwei Extralagen;
- Fig. 7: eine schematische Ansicht eines Modulsystems mit Bewässerungsvorrichtung;
- Fig. 8: eine schematische Ansicht eines Modulsystems mit Befestigungsvorrichtung;
- Fig. 9: eine schematische Ansicht eines Moduls an einer Befestigungsvorrichtung;
- Fig. 10: eine Ansicht von Modulen an einer Außenfläche;
- Fig. 11: eine Ansicht von Modulen an einer Innenfläche; und
- Fig. 12: eine Ansicht eines Moduls an einem Kleidungsstück.

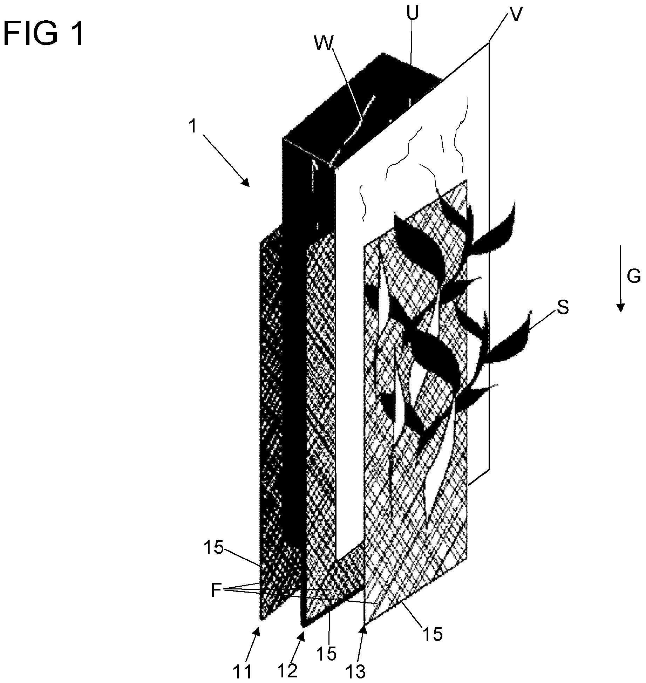

Fig. 1 zeigt eine Explosionsansicht eines Moduls 1, in dem mehrere Pflanzen mit Wurzeln W und Sprossen S aufgenommen sind. Die Sprosse S wachsen an einer Sprossseite des Moduls 1 und die Wurzeln W wachsen an einer Wurzelseite des Moduls 1.

Das Modul 1 dient zur Vertikalbegrünung, so dass die Wurzelseite und die Sprossseite parallel zur Gewichtskraft G aneinandergrenzen. Die Vertikalbegrünung kann eine bestimmungsgemäße Verwendung des Moduls 1 darstellen. Jedoch sind auch andere Verwendungen denkbar und möglich, bei beispielsweise denen die Wurzelseite und die Sprossseite quer zur Gewichtskraft G aneinandergrenzen.

Das Modul 1 weist drei Lagen 11, 12, 13 aus Fäden F auf. Eine erste Lage 11 begrenzt das Modul 1 nach außen an der Wurzelseite. Die erste Lage 11 hat die höchste Fadendichte der drei Lagen 11, 12, 13. An die erste Lage 11 grenzt eine zweite Lage 12 mit einer im Vergleich zur ersten Lage 11 geringeren Fadendichte an. Die erste Lage 11 und die zweite Lage 12 bilden zwischen sich einen ersten Aufnahmeraum 1A aus, in den ein Substrat U aufgenommen ist. Das Substrat U kann beispielsweise Erde sein. Die Wurzeln W der Pflanzen können in das Substrat U eindringen, um den Pflanzen Halt zu geben und optional um die Pflanzen mit Nährstoffen zu versorgen.

An die zweite Lage 12 grenzt eine dritte Lage 13 an. Die dritte Lage 13 hat die geringste Fadendichte der drei Lagen 11, 12, 13. Die Fadendichte nimmt also von der ersten über die zweite zur dritten Lage 13 ab. Die dritte Lage 13 ist mit der zweiten Lage 12 verbunden, so dass zwischen der zweiten Lage 12 und der dritten Lage 13 ein zweiter Aufnahmeraum 1B ausgebildet ist. In dem zweiten Aufnahmeraum 1B ist ein Samenelement V aufgenommen. Das Samenelement V kann beispielsweise eine Matte wie eine Hanfmatte mit Samen sein. Vorliegend sind aus zumindest einigen der Samen bereits Pflanzen entstanden, deren Sprosse S durch die dritte Lage 13 hindurchgewachsen sind. Die Wurzeln der Pflanzen sind durch die zweite Lage 12 hindurch in den ersten Aufnahmeraum 1A gewachsen.

Die dritte Lage 13 dient also dazu, das Samenelement V an der zweiten Lage 12 zu halten. Es kann außerdem den sich aus den Samen der Pflanzen entwickelnden Trieben ermöglichen, durch die dritte Lage 13 hindurch zu wachsen. Um das Hindurchwachsen zu ermöglichen, weist die dritte Lage 13 die geringste Fadendichte auf. Die Fäden F der dritten Lage 13 sind so lose miteinander verbunden, dass hindurchwachsende Pflanzen die Fäden F beim Wachsen verschieben können.

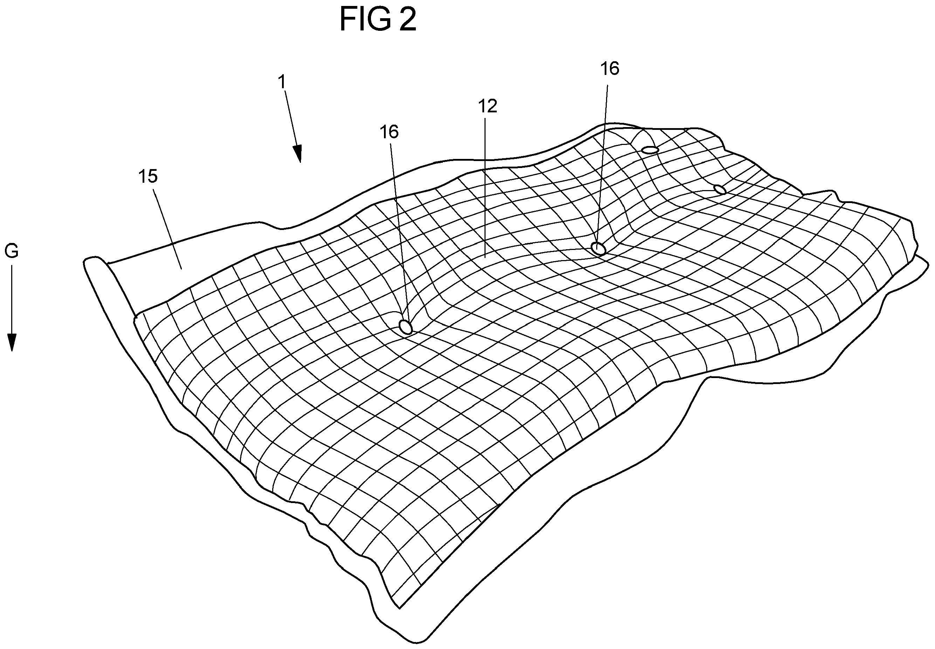

Fig. 2 zeigt ein weiteres Ausführungsbeispiel des Moduls 1, wobei das Modul 1 kissenförmig ausgebildet ist. Die Sprossseite ist entlang der Gewichtskraft G oberhalb der Wurzelseite angeordnet, so dass die Wurzelseite und die Sprossseite quer zur Gewichtskraft G aneinandergrenzen. Das Modul umfasst zwei Lagen, von denen die zweite Lage 12 sichtbar ist. Die Darstellung zeigt Kettfäden und Schussfäden, aus denen die Lage 12 gewoben ist, wobei die Kettfäden quer zu den Schussfäden angeordnet sind. Der Abstand zwischen den Fäden ist ausreichend groß, so dass die Triebe von Pflanzen, die zweite Lage 12 durchdringen können, um entgegen der Gewichtskraft G nach oben zu wachsen. Die zweite Lage 12 ist über einen vollständig umlaufenden Rand 15 mit der ersten Lage 11 verwoben. Die Lagen 11, 12 bilden somit ein einziges Textilstück.

Innerhalb des Randes 15 sind die Lagen 11, 12 zusätzlich über zwei Anbindungspunkte 16 miteinander verbunden. Über die Anbindungspunkte 16 kann eine Ausbauchung des Moduls 1 durch die Füllung kontrolliert werden. Außerdem kann durch die Anbindungspunkte 16 eine Verteilung eines kleinteiligen Substrats, wie beispielsweise Erde kontrolliert werden.

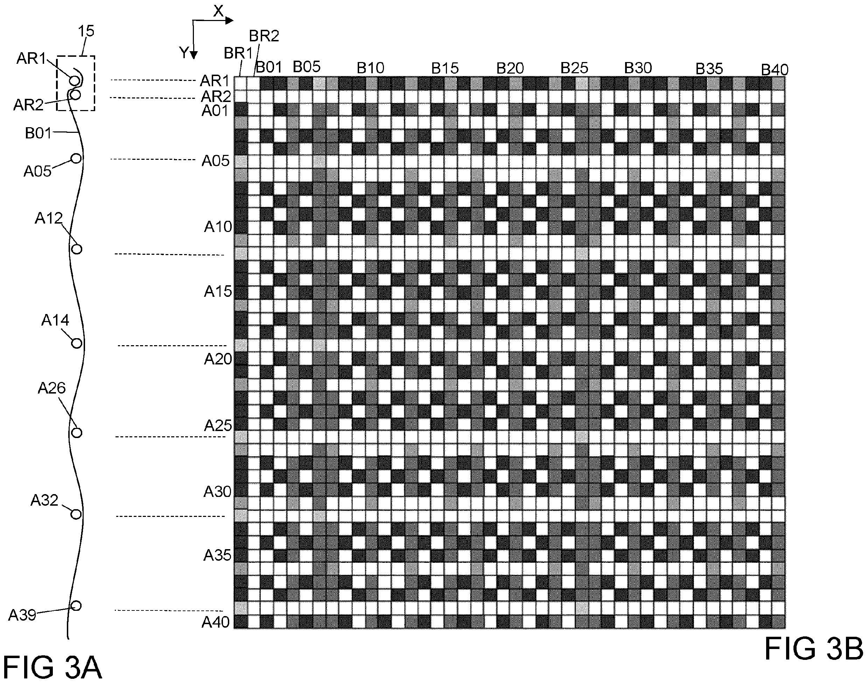

Fig. 3A und 3B zeigen ein beispielhaftes Bindungsmuster (Rapport) für drei Lagen 11, 12, 13. Fig. 3A zeigt einen Querschnitt durch das Bindungsmuster in Fig. 3B. Das Bindungsmuster in Fig. 3B weist 42 Quadrate entlang einer Schussrichtung X und 42 Quadrate entlang einer Kettrichtung Y auf. Das Bindungsmuster kann als eine Reihe von Anweisungen an eine Webmaschine verstanden werden, die Kettfäden bei einem Schuss entlang der Schussrichtung X zu senken (weißes Quadrat) oder zu heben (dunkles Quadrat). Wenn die Kettfäden gesenkt sind, ist der Schussfaden an einem Kreuzungspunkt zwischen Schuss- und Kettfaden oberhalb der Kettfäden angeordnet und wenn die Kettfäden gehoben sind, ist der Schussfaden an einem Kreuzungspunkt unterhalb der Kettfäden angeordnet.

Die Kettfäden B01, B02, B04, B07, B08, B10, B11, B13, B14, B16, B18, B19, B21, B22, B24, B27, B28, B30, B31, B33, B34, B36, B38 und B39 sind der ersten Lage 11 zugeordnet. Von 40 Kettfäden umfasst die erste Lage 11 also 24 Kettfäden. Zudem sind der ersten Lage 11 die Schussfäden A01, A03, A04, A07 bis A10, A13 bis A15, A17, A18, A20, A21, A23 bis A25, A28 bis A30, A33 bis A35, A37, A38 und A40 zugeordnet. Von 40 Schussfäden umfasst die erste Lage 11 also 26 Schussfäden. Die erste Lage umfasst also 60 % der Kettfäden und 65 % der Schussfäden.

Die Kettfäden der ersten Lage 11 werden periodisch durch Gruppen von 2 bis 4 benachbarten Schussfäden miteinander verbunden.

Die Kettfäden B03, B06, B09, B12, B15, B17, B20, B23, B26, B29, B32, B35, B37 und B40 sind der zweiten Lage 12 zugeordnet. Von 40 Kettfäden umfasst die zweite Lage 12 also insgesamt 14 Kettfäden. Die Schussfäden A02, A06, A11, A16, A22, A27, A31 und A36 sind der zweiten Lage 12 zugeordnet. Von 40 Schussfäden umfasst die zweite Lage 12 also insgesamt acht Schussfäden. Die zweite Lage umfasst also 30 % der Kettfäden und 20 % der Schussfäden. Durch die höhere Anzahl an Kettfäden im Vergleich zur Anzahl der Schussfäden kann für die zweite Lage 12 eine höhere Tragfähigkeit entlang der Kettrichtung Y erzielt werden, so dass beispielsweise das Substrat U in ersten Aufnahmeraum 1A sicherer gehalten werden kann.

Die Kettfäden der zweiten Lage 12 werden also durch Schussfäden miteinander verbunden, die zueinander einen Abstand von 3 bis 5 Schussfäden aufweisen. Die Schussfäden zwischen den Schussfäden der zweiten Lage 12 sind der ersten und/oder der dritten Lage 13 zugeordnet.

Die Kettfäden B05 und B25 sind der dritten Lage 13 zugeordnet. Zudem sind der dritten Lage 13 die Schussfäden A05, A12, A19, A26, A32, und A39 zugeordnet. Von 40 Schussfäden umfasst die dritte Lage 13 also insgesamt sechs Schussfäden. Die dritte Lage umfasst also 5 % der Kettfäden und 15 % der Schussfäden. Durch die höhere Anzahl an Schussfäden im Vergleich zur Anzahl der Kettfäden kann für die dritte Lage 13 eine bessere Verwebung der dritten Lage 13 mit den anderen Lagen 11, 12 am Rand 15 erzielt werden.

Die Bindungskreuzungen zwischen dem Kettfaden B5 und den Schussfäden der dritten Lage 13 sind zur Veranschaulichung in Fig. 3A dargestellt.

Die Kettfäden der dritten Lage 13 werden demnach durch Schussfäden miteinander verbunden, die zueinander einen Abstand von 5 bis 6 Schussfäden haben. Die Schussfäden zwischen den Schussfäden der dritten Lage 13 sind der zweiten oder der ersten Lage 11 zugeordnet.

Die Lagen 11, 12, 13 sind jeweils mit einer Leinwandbindung gewoben, um eine möglichst hohe Schiebefestigkeit zu erzielen. Alternativ kann für mindestens eine der Lagen 11, 12, 13 ebenso eine Atlasbindung, beispielsweise eine 10er oder 20er Atlasbindung verwendet werden.

Durch die Zuordnung der Kettfäden entsprechend dem abgebildeten Bindungsmuster kann ein dreilagiges Gewebe erstellt werden, wobei die Lagen 11, 12, 13 innerhalb eines umlaufenden Randes 15 voneinander getrennt sind, so dass sie zwischen sich Aufnahmeräume ausbilden können. Der Rand 15 kann grundsätzlich vollständig umlaufend um die Lagen 11, 12, 13 ausgebildet sein. Insbesondere kann der Rand 15 die Lagen 11, 12, 13 an mindestens drei Seiten verbinden (in Fig. 3B ist der rechte Rand nicht dargestellt).

Der Rand 15 umfasst mindestens einen Abschnitt entlang der Schussrichtung X und mindestens ein Abschnitt entlang der Kettrichtung Y. An dem mindestens einen Abschnitt entlang der Schussrichtung X sind alle Kettfäden B01 bis B40, die nicht einem Randabschnitt entlang der Kettrichtung Y zugeordnet sind (also ausgenommen BR1 und BR2), über einem ersten Schussfaden AR1 gehoben und unmittelbar benachbart dazu entlang einem zweiten Schussfaden AR2 gesenkt, so das alle Lagen 11, 12, 13 an dem Randbereich miteinander verwoben sind.

Der mindestens eine Abschnitt entlang der Kettrichtung Y des Randes 15 weist mindestens zwei Kettfäden BR1 und BR2 auf, von denen ein erster Kettfaden BR1 gehoben und der unmittelbar benachbarte zweite Kettfaden BR2 gesenkt ist, so dass die Schussfäden A01 bis A40 aller Lagen 11, 12, 13 am Rand 15 miteinander verwoben sind. Grundsätzlich ist es natürlich denkbar und möglich, dass die Randabschnitte eine beliebige Anzahl von Schussfäden AR1, AR2 bzw. Kettfäden BR1, BR2 aufweisen, um dem Modul 1 einen ausreichend stabilen Rand 15 zu geben. Grundsätzlich können an einem Abschnitt des Randes 15 an der Schussrichtung X abwechselnd gemeinsam gehobene oder gesenkte Kettfäden B01 bis B40 entlang der Kettrichtung Y vorgesehen sein. Ein Abschnitt des Randes 15 an der Kettrichtung Y kann abwechselnd gehobene und gesenkte Kettfäden BR1, BR2 entlang der Schussrichtung X aufweisen. Eine alternative Bindungstruktur wie beispielsweise eine Atlasbindung am Rand 15 ist ebenso denkbar und möglich.

Das abgebildete Bindungsmuster ist lediglich beispielhaft zu verstehen und soll verdeutlichen, wie durch Zuordnung der Kettfäden zu den Lagen 11, 12, 13 ein mehrlagiges Gewebe gewoben werden kann. Entlang der Schussrichtung X kann sich das Bindungsmuster periodisch fortsetzen, so dass sich an dem Kettfaden B40 das gleiche Muster beginnend von dem Kettfaden B01 anschließt. Ebenso kann sich das Bindungsmuster periodisch entlang der Kettrichtung Y fortsetzen, so dass sich an den Schussfaden A40 das gleiche Muster beginnend von dem Schussfaden A01 anschließt. Entlang der Schussrichtung X und entlang der Kettrichtung Y kann optional jeweils ein Rand 15 vorgesehen sein, der entlang der Schussrichtung X aufgebaut ist wie das Muster des Kettfadens BR2 und anschließend das Muster des Kettfaden BR1, und entlang der Kettrichtung Y aufgebaut ist wie das Muster des Schussfadens AR2 und anschließend des Schussfaden AR1. Auf diese Weise kann ein Endlosband von Modulen hergestellt werden, das für die bestimmungsgemäße Verwendung lediglich in einzelne Module zerlegt werden muss.

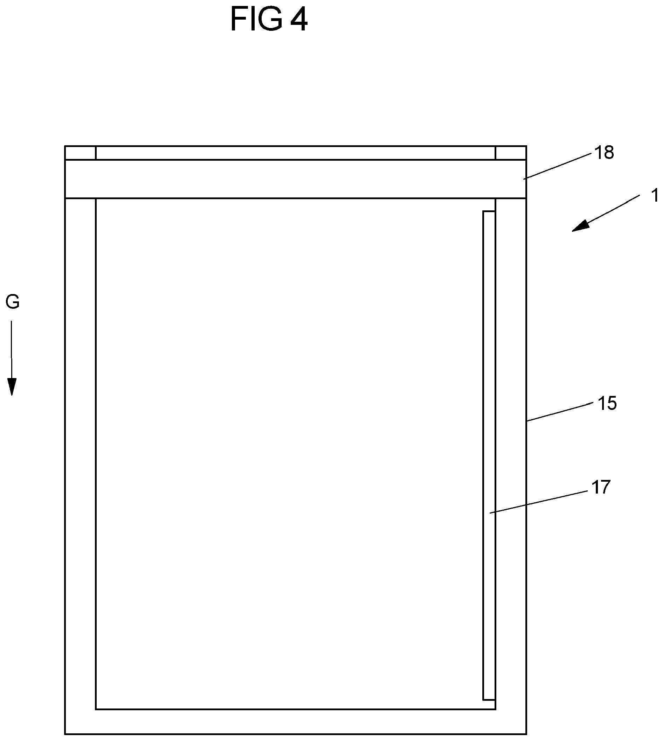

Fig. 4 zeigt ein Modul 1 zur Vertikalbegrünung mit mehreren Lagen 11, 12, 13, von denen die oberste (dritte Lage 13) sichtbar ist, die einen umlaufenden Rand 15 aufweisen, über den die Lagen 11, 12, 13 zumindest abschnittsweise miteinander verwebt sind. Der umlaufende Rand 15 begrenzt die Lagen 11, 12, 13 innerhalb eines Abschnitts von über 75 % des Randbereichs der Lagen 11, 12, 13. An einem Randabschnitt ist eine Öffnung 18 vorgesehen, über die der erste Aufnahmeraum 1A, der zwischen den Lagen 11, 12 ausgebildet ist, zum Einbringen eines Substrats U zugänglich ist. An der Öffnung 18 sind die Lagen 11, 12, die den ersten Aufnahmeraum 1A ausbilden nicht miteinander verwebt, so dass der Zugang leicht möglich ist und die Öffnung 18 trotzdem stabil sein kann. Bei den abgebildeten rechteckig ausgebildeten Lagen 11, 12, 13 kann es vorteilhaft sein, dass die Öffnung 18 wie abgebildet an einer Oberseite des Moduls 1 angeordnet ist, die bei der vertikalen Anordnung des Moduls 1 entlang der Gewichtskraft G oben ist. Über die zwei seitlichen und den einen unteren Abschnitt des Randes 15, der entlang der Gewichtskraft G unten angeordnet ist, sind die Lagen 11, 12, 13 miteinander verwoben.

Zudem ist an mindestens einer der Lagen 11, 12, 13 ein Arbeitsbereich 17 vorgesehen, dessen Fadendichte gegenüber einem anderen Bereich der mindestens einen Lage 11, 12, 13 erhöht ist. Der Arbeitsbereich 17 grenzt an einen Rand 15 der mindestens einen Lage 11, 12, 13 an, kann aber grundsätzlich ebenso dazu beabstandet sein. Beispielsweise kann die mindestens eine Lage 11, 12, 13 ein periodisches Bindungsmuster aufweisen. Der Arbeitsbereich 17 kann das periodische Bindungsmuster der mindestens einen Lage 11, 12, 13 durchbrechen und somit einen Bereich bilden, der eine abweichende Periodizität aufweist.

Der Arbeitsbereich 17 ist als ein Streifen, beispielsweise mit einer Breite von 0,5 bis 5 cm und einer Länge von 50 bis 90 % einer Länge der mindestens einen Lage 11, 12, 13, parallel zum Rand 15 ausgebildet. An dem Arbeitsbereich 17 kann die Lage 11, 12, 13 aufgeschnitten werden, um beispielsweise ein Substrat U oder ein Samenelement V in einen Aufnahmeraum 1A, 1B einzubringen. Dann kann die Lage 11, 12, 13 an dem Arbeitsbereich 17 wieder verschlossen werden. Dies kann beispielsweise durch eine Naht an dem Arbeitsbereich 17 geschehen.

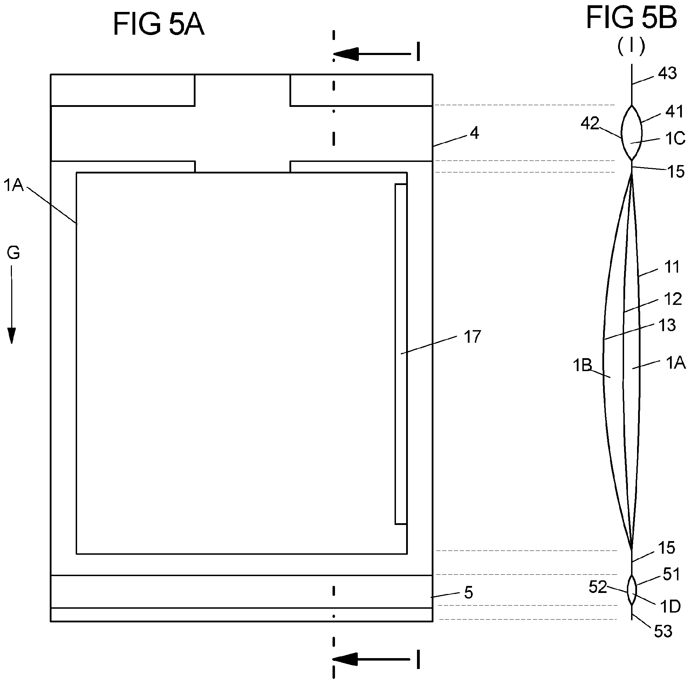

Fig. 5A und 5B zeigen ein Modulsystem mit zusätzlichen Extralagen. Fig. 5B zeigt einen Schnitt entlang der Schnittachse I durch das Modul 1, das in Fig. 5A abgebildet ist. Das Modul 1 umfasst drei Lagen 11, 12, 13, die dadurch miteinander verbunden sind, dass sie am Rand 15 miteinander verwoben sind. Zwischen der ersten und der zweiten Lage 11, 12 ist ein erster Aufnahmeraum 1A zur Aufnahme eines Substrats U für Wurzeln W der Pflanzen ausgebildet. Zwischen der zweiten und der dritten Lage 12, 13 ist ein zweiter Aufnahmeraum 1B zur Aufnahme eines Samenelements V ausgebildet. Grundsätzlich können an dem Modul 1 also zwei (oder mehr) Lagen 11, 12, 13 vorgesehen sein, die jeweils Aufnahmeräume zwischen einander ausbilden.

An Abschnitten des Randes 15 der drei Lagen 11, 12, 13 sind Extralagen 41, 42, 51, 52 angeordnet. Vorliegend sind sie an entlang der Gewichtskraft G gegenüberliegenden Abschnitten des Randes 15 angeordnet und bilden jeweils einen Aufnahmeraum 1C, 1D dadurch aus, dass sie miteinander verbunden sind. Die Kettfäden der drei Lagen 11, 12, 13 des Moduls 1 sind durch die drei Lagen 11, 12, 13 in die Extralagen 41, 42, 51, 52 hinein erstreckt, so dass die Lagen 11, 12, 13 und die Extralagen 41, 42, 51, 52 miteinander verwoben sind.

Die beiden oberen Extralagen 41, 42 sind an einen oberen Rand 15 der drei Lagen 11, 12, 13 angeschlossen. Die beiden oberen Lagen 11, 12, 13 sind wiederum an einem oberen Rand 43 miteinander verbunden, so dass sie zwischen dem Rand 15 der drei Lagen 11, 12, 13 und dem oberen Rand 43 einen dritten Aufnahmeraum 1C ausbilden. Der dritte Aufnahmeraum 1C kann dafür vorgesehen sein, eine Bewässerungsvorrichtung 6 aufzunehmen.

Zudem sind die zwei oberen Extralagen 41, 42 an dem oberen Rand 15 nur teilweise verwoben, so dass der dritte Aufnahmeraum 1C in einen Abschnitt des oberen Randes 15 hinein erstreckt ist. Ebenso sind mindestens zwei der drei Lagen 11, 12, 13 an dem den oberen Extralagen 41, 42 zugewandten Randabschnitt nur teilweise miteinander verwoben, so dass der Aufnahmeraum 1A zwischen den mindestens zwei Lagen 11, 12 mit dem dritten Aufnahmeraum 1C verbunden ist, so dass die zwei Aufnahmeräume 1A, 1C einen gemeinsamen Aufnahmeraum ausbilden können.

Die zwei unteren Extralagen 51, 52 sind an einen unteren Rand 15 der drei Lagen 11, 12, 13 des Moduls 1 angeschlossen. Die zwei unteren Lagen 11, 12, 13 sind wiederum an einem unteren Rand 53 miteinander verbunden, so dass sie zwischen dem Rand 15 der drei Lagen 11, 12, 13 und dem unteren Rand 53 einen vierten Aufnahmeraum 1D ausbilden. Der vierte Aufnahmeraum 1D kann dafür vorgesehen sein, eine Absorptionsvorrichtung 3 aufzunehmen, mit der überschüssiges Bewässerungsmittel absorbiert werden kann.

Das abgebildete Modul 1 kann folgende Abmessungen haben. Eine Breite (quer zur Gewichtskraft G) von 100,0 mm, eine Höhe, entlang der Gewichtskraft G, von 125,0 bis 133,0 mm, eine Höhe des dritten Aufnahmeraum 1C von 2,4 bis 14,0 mm und eine Höhe des vierten Aufnahmeraum 1D von 7,0 mm. Eine Breite des Randes 15 kann 6,8 mm betragen. Die Anbindungspunkte 16 können einen Durchmesser von 0,3 mm haben. Sie können zueinander einen Abstand von 20,4 bis 35,1 mm haben. Die genannten Werte verstehen sich als Werte mit einem Toleranzbereich von 0,5 mm.

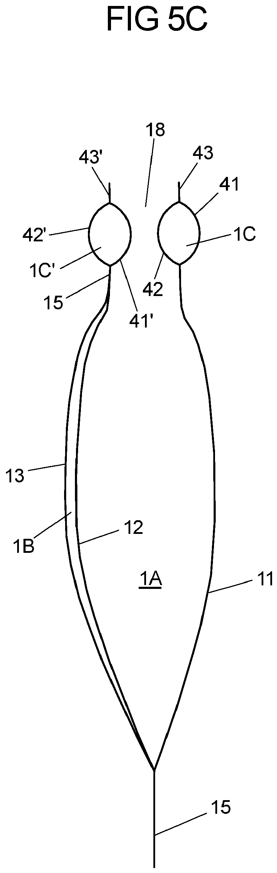

Fig. 5C zeigt eine alternative Ausgestaltung des Moduls gemäß Fig. 5A und Fig. 5B. Neben der ersten, zweiten und dritten Lage 11, 12, 13 mit dem ersten und zweiten Aufnahmeraum 1A, 1B weist das abgebildete Modul einen Rand 15 auf, über den die drei Lagen 11, 12, 13 miteinander verbunden sind. An einem Abschnitt des Randes 15 sind nur die zweite und die dritte Lage 12, 13 an dem Rand 15 miteinander verbunden. Zwischen der ersten und der zweiten Lage 11, 12 ist eine Öffnung 18 ausgebildet. Über die Öffnung 18 ist der erste Aufnahmeraum 1A zugänglich.

An einem Abschnitt des Randes 15, der die Öffnung 18 umgrenzt, sind Extralagen 41, 42, 41', 42' angeordnet. Zwei der Extralagen 41, 42 sind an der ersten Lage 11 angeordnet. Weitere zwei der Extralagen 41', 42' sind an der zweiten Lage 12 angeordnet. Die Extralagen 41, 42, 41', 42' begrenzen jeweils ähnlich wie in den vorangegangenen Ausführungsbeispielen einen dritten und einen weiteren dritten Aufnahmeraum 1C, 1C', indem sie miteinander jeweils an oberen Rändern 43, 43' verbunden sind.

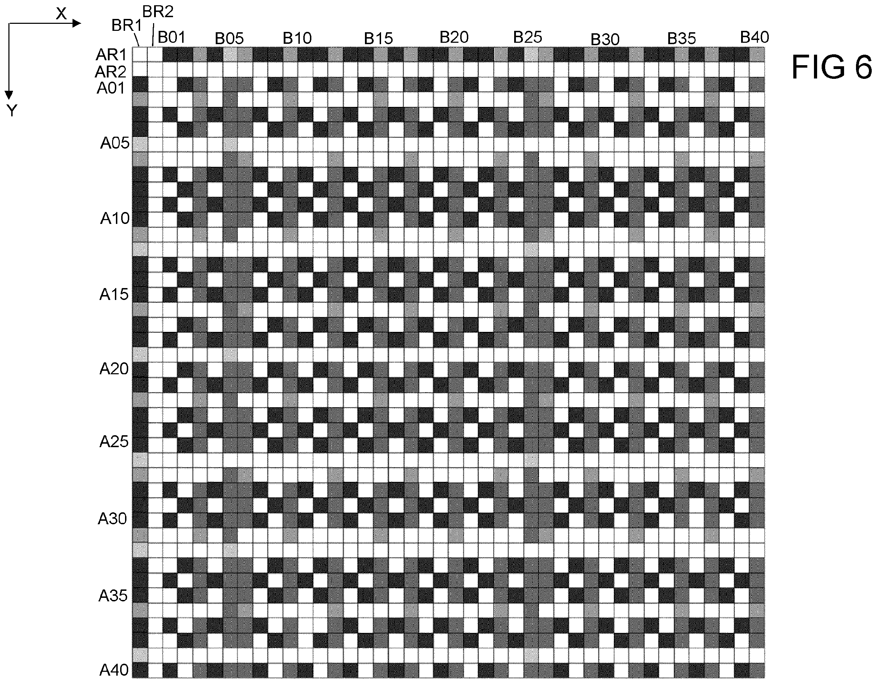

Ein beispielhaftes Bindungsmuster für zwei Extralagen ist in Fig. 6 abgebildet. Das Bindungsmuster kann für die zwei oberen und/oder für die zwei unteren Extralagen 41, 42, 51, 52 verwendet werden.

Zumindest eine erste der zwei Extralagen 41, 51 ist mit einer Leinwandbindung gewoben. Gruppen, die ein bis vier Schussfäden umfassen (beispielsweise A03, A04 und A07 bis A10), sind in der ersten Extralage 41, 51 durch ein bis zwei Schussfäden (beispielsweise A05 und A06) beabstandet, die der zweiten Extralage 42, 52 zugeordnet sind. Gruppen von ein bis zwei Kettfäden (beispielsweise B07, B08 und B10, B11) sind in der ersten Extralage 41, 51 durch ein bis zwei Kettfäden (beispielsweise B09) beabstandet, die der zweiten Extralage 42, 52 zugeordnet sind. Von 40 Schuss- und Kettfäden A01,..., A40, B01,..., B40 sind der ersten Extralage 26 Schuss- und 24 Kettfäden zugeordnet. Der zweiten Extralage sind von 40 Schuss- und Kettfäden A01,..., A40, B01,..., B40 14 Schuss- und 16 Kettfäden zugeordnet. Die 40 den Extralagen zugeordneten Schuss und Kettfäden werden ergänzt durch zusätzliche Schuss und Kettfäden AR1, AR2 und BR1, BR2, die einen Abschnitt des Randes 15 (beispielsweise dem oberen oder unteren Rand 15) zugeordnet sind.

Die erste Extralage weist daher eine höhere Fadendichte auf, als die zweite Extralage. Eine Fadendichte der ersten Extralage beträgt 62,5 %. Eine Fadendichte der zweiten Extralage beträgt dementsprechend 37,5 %. Grundsätzlich kann die erste Extralage das 1,5- bis 2-fache, insbesondere 1,6 bis 1,8 -fache der Fadendichte der zweiten Extralage aufweisen.

Die mindestens eine zweite Extralage 42, 52 kann beispielsweise bei der Nutzung des Moduls 1 als Vertikalbegrünung einen sichtbaren Frontabschnitt des Moduls 1 bilden, durch den ein in den Aufnahmeraum 1C, 1D zwischen den zwei Extralagen eingebrachter Gegenstand wie eine Bewässerungsvorrichtung 6 hindurchscheinen kann. Grundsätzlich kann die erste Extralage 41, 51 die gleiche Fadendichte wie die erste Lage 11 des Moduls 1 aufweisen. Die Fadendichte der zweiten Extralage 42, 52 kann sich aus der Summe der Fadendichten der zweiten und dritten Lage 12, 13 des Moduls 1 ergeben. Mit anderen Worten können die zweite und die dritte Lage 12, 13 anschließend an einen, die Lagen 12, 13 von den Extralagen 41, 42, 51, 52 trennenden Randabschnitt, zur zweiten Extralage 42, 52 verwoben werden.

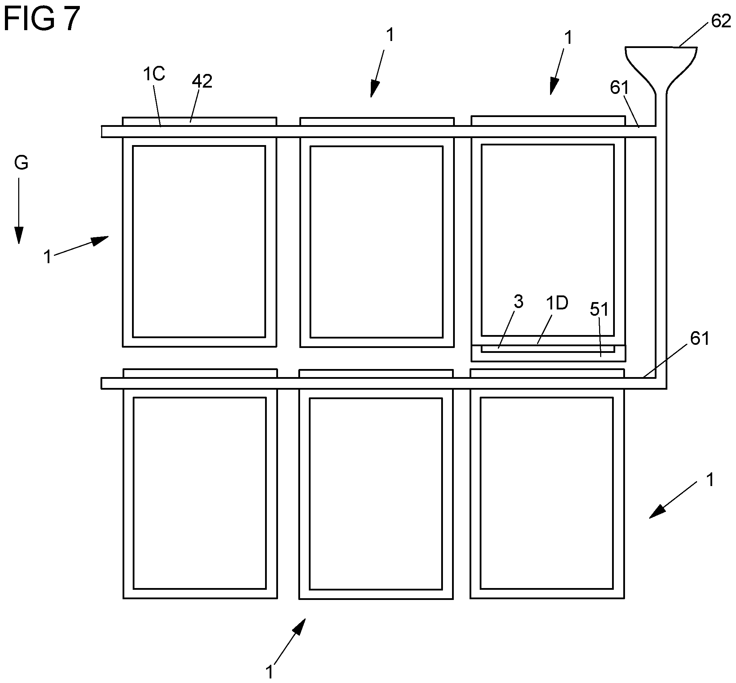

Fig. 7 zeigt ein Modulsystem mit sechs Modulen 1, die in einer Ebene parallel zur Gewichtskraft G angeordnet sind. Die Module 1 umfassen jeweils zwei obere Extralagen 41, 42, die einen dritten Aufnahmeraum 1C zwischen sich ausbilden. Der dritte Aufnahmeraum 1C wird mit einer Befestigungsvorrichtung 2 zusammen, die vorliegend durch ein Leitungsrohr 61 gebildet ist, um jeweils eine Masse des Moduls 1 entgegen der Gewichtskraft G zu halten. Mit anderen Worten hängen die Module 1 an Leitungsrohren 61.

Das Modulsystem weist eine Bewässerungsvorrichtung 6 auf, der die Leitungsrohre 61 zugeordnet sind. Die Leitungsrohre 61 wird über eine Bewässerungsmittelquelle 62, beispielsweise ein Wassertank oder ein Trichter zum Einfüllen von Bewässerungsmittel, Bewässerungsmittel zugeführt. Das Bewässerungsmittel kann den Modulen 1 somit von oben zugeführt werden, so dass es sich entlang der Gewichtskraft G entlang der Module 1 ausbreiten kann. Beispielsweise kann als Bewässerungsmittel Wasser verwendet werden, dass über die Leitungsrohre 61 in die Module 1 hineinsickern kann und so Pflanzen an den Modulen 1 zugeführt werden kann. Die Bewässerungsvorrichtung 6 dient auch als Befestigungsvorrichtung 2. Grundsätzlich kann natürlich ebenso eine von der Bewässerungsvorrichtung 6 separate Befestigungsvorrichtung 2 vorgesehen sein, über die die Module 1 entgegen der Gewichtskraft G gehalten werden.

Eines der Module 1 weist eine Absorptionsvorrichtung 3 auf, mit der überschüssiges Bewässerungsmittel absorbiert werden kann. Die Absorptionsvorrichtung 3 ist in einem vierten Aufnahmeraum 1D angeordnet, der durch zwei untere Extralagen ausgebildet ist, von denen die zweite Extralage 52 sichtbar ist. Natürlich kann eine derartige Absorptionsvorrichtung 3 ebenso bei den anderen Modulen 1 vorhanden sein.

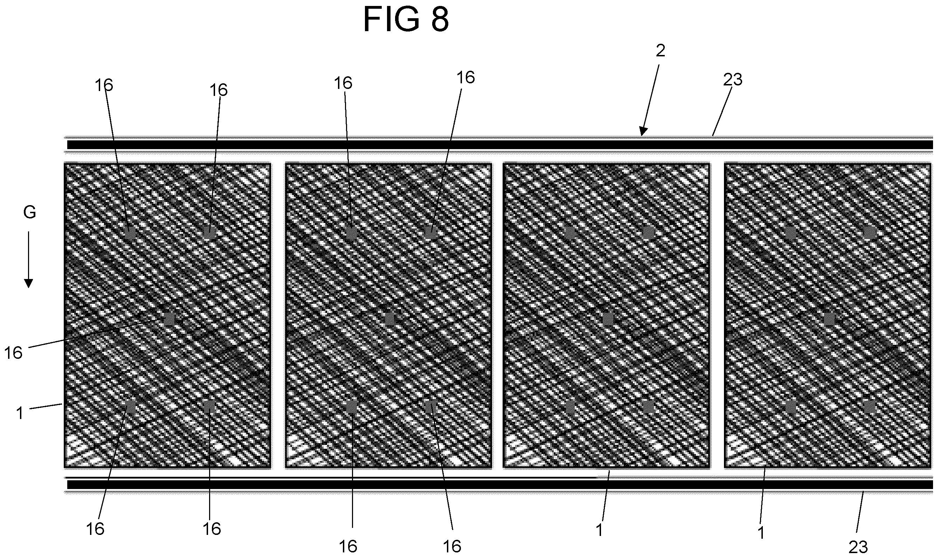

Fig. 8 zeigt eine beispielhafte Ansicht eines Modulsystems mit vier Modulen 1, die zur Vertikalbegrünung entgegen der Gewichtskraft G mit einer Befestigungsvorrichtung 2 gehalten sind. Die Befestigungsvorrichtung 2 umfasst eine obere und eine untere Schienenanordnung 23, die die Module 1 längsverschieblich quer zur Gewichtskraft G hält. Zur Gestaltung der Module 1 sind an jedem Modul 1 fünf Anbindungspunkte 16 vorgesehen, über die eine Ausbauchung der Module 1 kontrollierbar ist. Die Zahl der Anbindungspunkte 16 und die Anordnung der Anbindungspunkte 16 kann je nach gewünschter Ausbauchung gewählt werden.

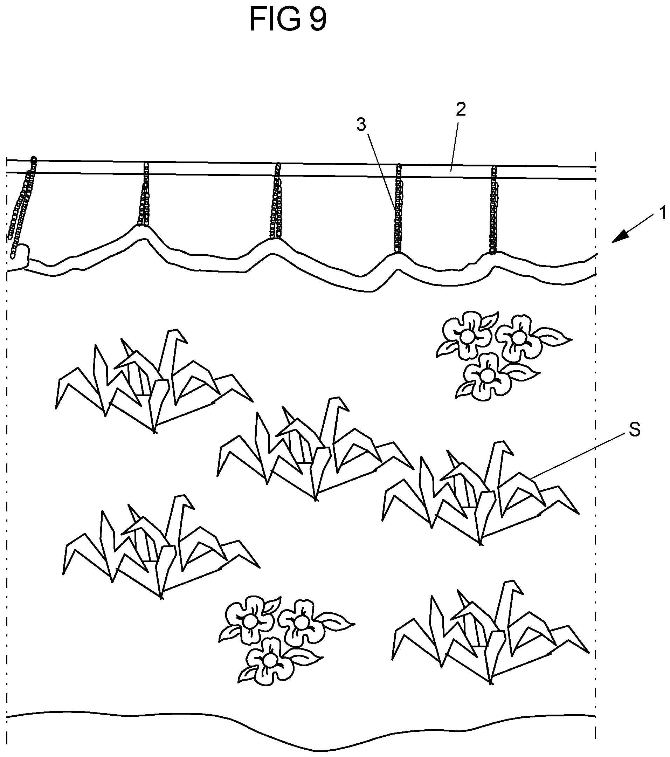

Fig. 9 zeigt ein Modulsystem mit einem Modul 1 und einer alternativen Befestigungsvorrichtung 2. Die Befestigungsvorrichtung 2 umfasst ein Trägerelement 21, beispielsweise ein Bambusrohr, mit einer Vielzahl von Befestigungselementen 22, die vorliegend durch Zugseile gebildet sind und über die das Modul 1 an dem Trägerelement 21 befestigt ist, so dass es von dem Trägerelement 21 herabhängt.

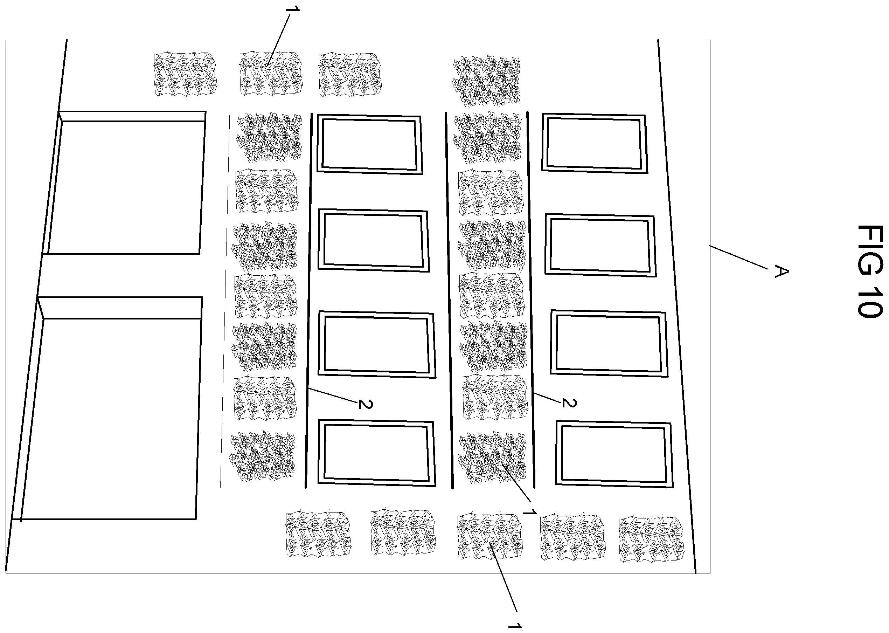

Fig. 10 zeigt ein Beispiel für eine bestimmungsgemäße Verwendung einer Vielzahl von Module 1. Die Module 1 sind an einer Außenfläche A eines Gebäudes (Fassade) angeordnet. Einige der Module 1 sind über eine Befestigungsvorrichtung 2 an der Außenfläche A angeordnet. Das Modulsystem kann also zur Begrünung von Fassaden verwendet werden. Natürlich ist es ebenso denkbar und möglich, andere Gegenstände im Freien, also im Außenbereich, mit Modulen 1 zu begründen. Dazu zählen beispielsweise Balkongitter, Pfosten, Masten, Mülleimer, Rückseiten von Verkehrsschildern, Autobahnplanken, Brücken und Windräder.

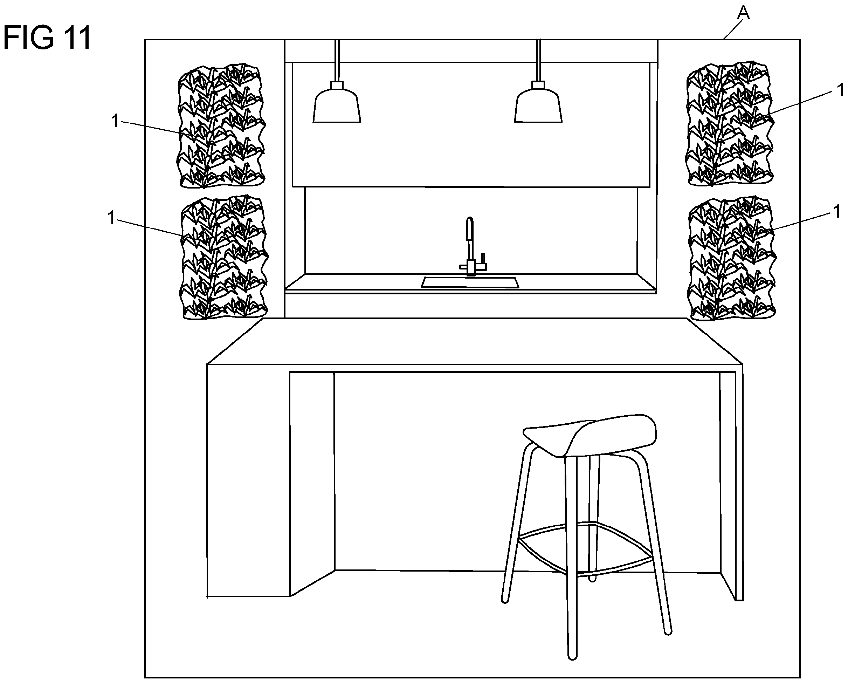

Fig. 11 zeigt ein Beispiel für eine bestimmungsgemäße Verwendung einer Vielzahl von Modulen 1. Die Module 1 sind an einer Innenfläche I eines Gebäudes (Zimmerwand) angeordnet. Das Modulsystem kann also beispielsweise zur Begrünung von Wänden eines Raumes in einem Wohngebäude verwendet werden. Natürlich können die Module 1 in einem Innenraum oder auch im Freien beliebig platziert werden. Dafür eignen sich sowohl vertikal aufhängbare Module 1 als auch kissenförmig ausgebildete Module 1, die unkompliziert auf dem Boden abgelegt werden können. Eine Befestigung an einer Zimmerdecke oder hängend von einer Ebene quer zur Gewichtskraft ist ebenso denkbar und möglich.

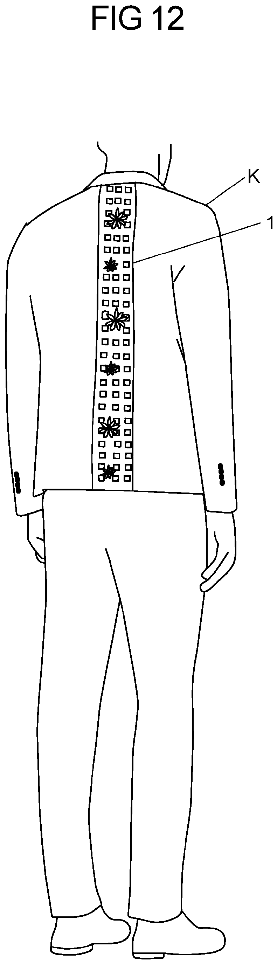

Fig. 12 zeigt ein Beispiel für eine weitere bestimmungsgemäße Verwendung eines Moduls 1. Die Verwendung umfasst ein Kleidungsstück mit einem Modul 1, dass auf einer beim Tragen nach außen weisenden Oberfläche des Kleidungsstücks angeordnet ist. Das Modul 1 kann also beispielsweise zur Begrünung von Kleidungsstücken K verwendet werden.

Die in den Figuren dargestellten Ausführungsbeispiele wurden anhand von Fäden umfassenden linearen Elementen beschrieben. Es ist ebenso denkbar und möglich, dass die linearen Elemente Fasern umfassen. Mindestens eine der Lagen kann beispielsweise zusammenhaftende Fasern aufweisen oder aus zusammenhaftenden Fasern bestehen. Insbesondere kann es sich bei den zusammenhaftenden Fasern um Vlies oder Filz handeln.

### Bezugszeichenliste

- 1: Modul
- 1A, 1B, 1C, 1C', 1D: Aufnahmeraum
- 11,12,13: Lage
- 15: Rand
- 16: Anbindungspunkt
- 17: Arbeitsbereich
- 18: Öffnung
- 2: Befestigungsvorrichtung
- 21: Trägerelement
- 22: Befestigungselement
- 23: Schienenanordnung
- 3: Absorptionsvorrichtung
- 4,5: Haltevorrichtung
- 41, 42, 41', 42': obere Extralage
- 43, 43': oberer Rand
- 51, 52: untere Extralage
- 53: unterer Rand
- 6: Bewässerungsvorrichtung
- 61: Leitungsrohr
- 62: Bewässerungsmittelquelle
- A: Außenfläche
- F: lineares Element
- G: Gewichtskraft
- I: Innenfläche
- K: Kleidungsstück
- S: Spross
- U: Substrat
- V: Samenelement
- W: Wurzel
- X: Schussrichtung
- Y: Kettrichtung
- AR1, AR2, A01, A02, ..., A40: Schussfaden
- BR1, BR2, B01, B02, ..., B40: Kettfaden

## Patentansprüche

1. Modul (1) zur Aufnahme von Pflanzen, mit
- mindestens zwei Lagen (11, 12) aus linearen Elementen (F), wobei
- die mindestens zwei Lagen (11, 12) miteinander verbunden sind, so dass
- zwischen den mindestens zwei Lagen (11, 12) ein erster Aufnahmeraum (1A) zur Aufnahme eines Substrats (U) für Wurzeln (W) der Pflanzen ausgebildet ist,
**dadurch gekennzeichnet, dass**
die mindestens zwei Lagen (11, 12) unterschiedliche Dichten an linearen Elementen (F) aufweisen.

2. Modul (1) nach Anspruch 1, **dadurch gekennzeichnet, dass** die mindestens zwei Lagen (11, 12) aus den linearen Elementen (F) gewebt sind.

3. Modul (1) nach einem der Ansprüche 1 oder 2, **dadurch gekennzeichnet, dass** die Dichten durch eine Anzahl von linearen Elementen (F), insbesondere einer Anzahl von Schussfäden (AR1, AR2, A01, A02, ..., A40) und Kettfäden (BR1, BR2, B01, B02, ..., B40) pro Flächeneinheit bestimmt ist, wobei optional eine der mindestens zwei Lagen (11, 12) mehr Schussfäden (AR1, AR2, A01, A02, ..., A40) als Kettfäden (BR1, BR2, B01, B02, ..., B40) aufweist.

4. Modul (1) nach einem der Ansprüche 1 bis 3, **dadurch gekennzeichnet, dass** das Modul (1)
- eine Wurzelseite, seitens der bei einer bestimmungsgemäßen Verwendung des Moduls (1) Wurzeln (W) der Pflanzen angeordnet sind, und
- eine Sprossseite, seitens der bei einer bestimmungsgemäßen Verwendung des Moduls (1) die Sprosse (S) der Pflanzen angeordnet sind,
aufweist, wobei eine erste der mindestens zwei Lagen (11) auf der Wurzelseite eine höhere Dichte an linearen Elementen (F) als eine zweite Lage der mindestens zwei Lagen (12) auf der Sprossseite aufweist.

5. Modul (1) nach einem der vorangegangenen Ansprüche, **dadurch gekennzeichnet, dass** eine dritte Lage (13) aus linearen Elementen (F) vorgesehen ist, die mit zumindest einer zweiten der mindestens zwei Lagen (12) verbunden ist, so dass zwischen der zweiten Lage (12) und der dritten Lage (13) ein zweiter Aufnahmeraum (1B) ausgebildet ist.

6. Modul (1) nach Anspruch 5, **dadurch gekennzeichnet, dass** die Dichte der linearen Elemente (F) von der ersten über die zweite zur dritten Lage (11, 12, 13) abnimmt oder in der zweiten Lage (12) geringer ist als in der ersten und dritten Lage (11, 13).

7. Modul (1) nach einem der vorangegangenen Ansprüche, **dadurch gekennzeichnet, dass** die mindestens zwei Lagen (11, 12) einen umlaufenden Rand (15) aufweisen, über den sie zumindest abschnittsweise miteinander verbunden sind.

8. Modul (1) nach Anspruch 7, **dadurch gekennzeichnet, dass** an einem Abschnitt des Randes (15) eine Öffnung (18) vorgesehen ist, über die der erste Aufnahmeraum (1A) zum Einbringen des Substrats (U) zugänglich ist.

9. Modul (1) nach einem der Ansprüche 7 oder 8, **dadurch gekennzeichnet, dass** an einem Abschnitt des Randes (15) mindestens zwei Extralagen (41, 42, 41', 42', 51, 52) angeordnet sind, die miteinander verbunden sind, so dass sie einen dritten Aufnahmeraum (1C, 1C', 1D) ausbilden.

10. Modul (1) nach Anspruch 9, **dadurch gekennzeichnet, dass** der dritte Aufnahmeraum (1C, 1C', 1D) dazu ausgebildet ist, mit einer Befestigungsvorrichtung (2) zusammenzuwirken, um eine Masse des Moduls (1) bei einer Verwendung des Moduls (1) zur Vertikalbegrünung entgegen der Gewichtskraft (G) zu halten.

11. Modul (1) nach einem der vorangegangenen Ansprüche, **dadurch gekennzeichnet, dass** mindestens eine der Lagen (11, 12, 13) einen Arbeitsbereich (17) aufweist, dessen Dichte an linearen Elementen (F) gegenüber einem anderen Bereich der mindestens einen der Lagen (11, 12, 13) erhöht ist.

12. Modulsystem zur Vertikalbegrünung mit mindestens einem Modul (1) nach einem der vorangegangenen Ansprüche und einer Befestigungsvorrichtung (2) zur Befestigung des mindestens einen Moduls (1), so dass das mindestens eine Modul (1) entgegen der Gewichtskraft (G) gehalten wird.

13. Modulsystem nach Anspruch 12, **gekennzeichnet durch** eine Bewässerungsvorrichtung (6) mit mindestens einem Leitungsrohr (61), über das dem mindestens einen Modul (1) von oben ein Bewässerungsmittel zugeführt werden kann, so dass sich das Bewässerungsmittel entlang der Gewichtskraft (G) entlang des mindestens einen Moduls (1) ausbreiten kann.

14. Modulsystem nach Anspruch einem der Ansprüche 12 oder 13, **gekennzeichnet durch** eine Absorptionsvorrichtung (3), mit der überschüssiges Bewässerungsmittel, das sich entlang der Gewichtskraft (G) an dem mindestens ein Modul (1) ausgebreitet hat, absorbiert werden kann, so dass ein weiteres Ausbreiten entlang der Gewichtskraft (G) über das mindestens eine Modul (1) hinaus verhindert wird.

15. Verfahren zur Herstellung eines Modul (1) zur Aufnahme von Pflanzen, umfassend die folgenden Schritte:
- Bereitstellen mindestens einer ersten Lage (11) aus linearen Elementen (F) mit einer ersten Dichte der linearen Elemente (F);
- Bereitstellen mindestens einer zweiten Lage (23) aus linearen Elementen (F) mit einer zweiten Dichte der linearen Elementen (F), die von der ersten Dichte verschieden ist;
- Verbinden der mindestens zwei Lagen (11, 12), so dass zwischen den mindestens zwei Lagen (11, 12) ein erster Aufnahmeraum (1A) zur Aufnahme eines Substrats (U) für Wurzeln (W) der Pflanzen ausgebildet wird.
